Europäisches Patentamt

European Patent Office

Office européen des brevets

(11) Veröffentlichungsnummer: **0 339 016**
**A1**

## (12) EUROPÄISCHE PATENTANMELDUNG

(21) Anmeldenummer: **89890108.7**

(22) Anmeldetag: **14.04.89**

(51) Int. Cl.⁴: **G 01 F 1/32**

(30) Priorität: **18.04.88 HU 196988**

(43) Veröffentlichungstag der Anmeldung:
**25.10.89 Patentblatt 89/43**

(84) Benannte Vertragsstaaten:
**AT BE CH DE ES FR GB GR IT LI LU NL SE**

(71) Anmelder: **Központi Bányászati Fejlesztési Intézet**
**Mikoviny S. u. 2-4**
**H-1525 Budapest (HU)**

(72) Erfinder: **Gáspár, Gyula**
**Joszef A. u. 81.**
**H-2092 Budakeszi (HU)**

**Hanko, János**
**Szilvánusz s. 43.**
**H.1031 Budapest (HU)**

**Kalocsa, Endre**
**Erdohát u. 16.**
**H-1037 Budapest (HU)**

**Miss, Jozsef**
**Ulloi u. 61**
**H-1091 Budapest (HU)**

**Szennay, Miklos**
**Zöldlomb u. 32/b.**
**H-1025 Budapest (HU)**

(74) Vertreter: **Vogeser, Werner, Dipl.-Ing. et al**
**Patentanwälte + Rechtsanwälte Hansmann, Vogeser,**
**Boecker & Alber Albert-Rosshaupter-Strasse 65**
**D-8000 München 70 (DE)**

(54) **Durchflussmessgerät.**

(57) Durchflussmessgerät, insbesondere zur Messung von Strömenden Gasen (1), mit einem in der Strömung des Gases (1) angeordneten Störungskörper (3) und einer an dem Strörungskörper sich abtrennende Wirbel zählenden Vorrichtung.

Die erfindungsgemässe Weiterentwicklung besteht nun darin, dass die Vorrichtung ein mit Ultraschall betriebenes Messrohr (2) enthält, das von der zu messenden Gasströmung (1) durchströmt wird und in einer zur Strömungsrichtung des Gases senkrechten Ebene an diametral entgegengesetzten Stellen einen Ultraschallstrahler (4) und einen Ultraschallempfänger (5) hat, wobei der Störungskörper (3) Stromaufwärts von dieser Ebene angeordnet ist.

Fig.3

EP 0 339 016 A1

## Beschreibung

**Durchflussmessgerät, insbesondere zur Messung von Strömung von Gasen, mit einem in der Strömung der Gasen angeordneten Störungskörper und einer an dem Störungskörper sich abtrennende Wirbel zählenden Vorrichtung.**

Die Erfindung bezieht sich auf ein Durchflussmessgerät, insbesondere zur Messung von Strömung von Gasen, mit einem in der Strömung der Gasen angeordneten Störungskörper und einer an dem Störungskörper sich abtrennende Wirbel zählenden Vorrichtung.

Die Messung von Gasströmungen, z.B. von Luftströmungen verursacht in mehreren Gebieten der Technik schwer lösbare Probleme. Besonders zutreffend ist diese Behauptung für den Bergbau, da bei den unterirdischen Anlagen die Überwachung der Gasströmungen, bzw. die frühzeitige Anzeige und Fernmeldung von unerwünschten Aenderungen der Gasströmungen eine eminente Bedeutung haben.

In den automatischen Belüftungssystemen der Gruben wird die Luftmenge, die zu den Abbaustellen strömt, durch die Messung der Strömungsgeschwindigkeit der Luft bestimmt. Die Fernmeldegeräte zur Messung der Wetterströmung können auf Grund verschiedener Prinzipien ausgeführt werden. Die Literaturangaben beweisen, dass am meissten die Turbinen oder thermischen Anemometer verwendet werden. Die Grundvorteile der Fernmeldegeräte mit Turbinengeber besteht in der verhältnismässig einfachen Konstruktion und in der linearen Charakteristik der Umformung der Wettergeschwindigkeit ins elektrische Signal. Ein Nachteil ist, dass dieses Gerät bei niedrigen Wettergeschwindigkeiten unsicher funktioniert - in den Gruben wird aber auch die Messung einer Wettergeschwindigkeit von 0,2 m/s erwünscht. Ein weiterer Nachteil ist, dass - die Feuchtigkeit, der Staub und die mechanischen Wirkungen - z.B. Stoessen, Vibrationen usw. - unter den Grubenverhältnissen die Betriebsfähigkeit nach kurzer Zeit beeinflussen. Infolge der Feuchtigkeit und der Verunreinigungen wird die Verwendung der thermischen Luftgeschwindigkeitsmessgeräte unter Tage unsicher.

Bei einer anderen Art der Strömungsmessgeräte werden die Wirbel, die durch einen Körper im Wege der Strömung hervorgerufen werden, zur Messung der Geschwindigkeit verwendet. Diese Erscheinung wurde zum ersten Male von Tódor Kálmán - einem Physiker ungarischer Stammung - beschrieben. Die Zahl der Wirbel, die sich während einer bestimmten Zeiteinheit vom Körper ablösen, ist der Strömungsgeschwindigkeit in einem breiten Bereich proportional. Die Ablösungsfrequenz der Wirbel, die sich vom Störungskörper ablösen, hängt ausser der Strömungsgeschwindigkeit des Mediums praktisch von den geometrischen Abmessungen, sowohl bei den Flüssigkeiten als auch bei den Gasen ab. Zur Überwachung der Frequenz des Abtrennens werden in den bekannten Lösungen mechanische Teile wie z.B. ein Thermistor oder eine Schwingplatte verwendet. Meistens wird die Schwingung der Platte mit einem induktiven Signalgeber erfasst.

In US-PS 4,584,883 ist ein Strömungsmesser beschrieben, in dem die Vibration der die Kármánschen Wirbel fühlenden Platte auf optischem Wege überwacht wird. Diese Lösung ist aber ebenfalls mit den bei den thermischen und mechanischen Anemometern erwähnten Nachteilen belästigt.

Die Erfindung hat nun die Aufgabe, ein Durchflussmessgerät, insbesondere zur Messung von Strömung von Gasen, zu schaffen, das von den Einflüssen der Umwelt wie Feuchtigkeit, Verunreinigungen, mechanische Einwirkungen weitgehend unabhängig funktionsfähig bleibt und eine erhöhte und stabile Genauigkeit hat, weiterhin auch unter schlagwetter- und kohlenstaubexplosionsgefährdeten Verhältnissen anwendbar ist. Das Gerät soll möglichst wartungsfrei und einfach handhabbar sein sowie eine unkomplizierte und leicht herstellbare Konstruktion haben.

Der Erfindung liegt der Gedanke zu Grunde, dass das Durchflussmessgerät ohne irgendwelche bewegliche mechanische Teile verwirklicht und gleichzeitig das Grundprinzip des Zählens der Kármánschen Wirbel beibehalten werden sollen. Es wurde weiterhin erkannt, dass diese Erkenntnisse mit Hilfe von Ultraschallwellen verwirklicht werden können.

Die erfindungsgemässe Weiterentwicklung besteht nun darin, dass die Vorrichtung ein mit Ultraschall betriebenes Messrohr enthält, das durch die zu messende Gasströmung durchströmt wird und in einer zur Strömungsrichtung des Gases senkrechten Ebene an diametral entgegengesetzten Stellen des Messrohres einen Ultraschallstrahler und einen Ultraschallempfänger hat, wobei der Störungskörper in Strömungsrichtung gesehen vor dieser Ebene angeordnet ist.

Im Sinne der Erfindung ist es vorteilhaft, wenn der Ultraschallstrahler an einem Ausgang eines Generators, der Ultraschallempfänger an einem Eingang eines Verstärkers sowie ein Referenzsignal-Ausgang des Generators und ein Ausgang des Verstärkers an Eingänge eines Phasendiskriminators angeschlossen sind, wobei an einem Ausgang des Phasendiskriminators in Reihe geschaltet ein Bandfilter, ein Komparator und ein Konverter anliegen. In diesem Falle können an einem Ausgang des Phasendiskriminators ein Regelsignalgeber und an dessen Ausgang der Generator angeschlosen sein.

Eine andere erfindungsgemäss vorteilhafte Ausführungsform besteht darin, dass der Phasendiskriminator als eine die relativen statischen Phasenunterschiede der an den Eingängen des Phasendiskriminators anliegenden Signale begrenzende und ein den Betriebsfrequenz des Generators korrigierendes Regelsignal für den Generator liefernde Schaltung ausgebildet ist.

Der Verstärker kann nach der Erfindung eine automatische Verstärkung haben oder limitierend sein.

Es ist erfindungsgemäss noch vorteilhaft, wenn das Messrohr als ein Venturi-Rohr ausgebildet ist.

Weitere Einzelheiten der Erfindung werden an Hand von Ausführungsbeispielen mit Bezug auf die beigelegten Zeichnungen näher erläutert. In der Zeichnung zeigen

Fig. 1 eine Blockschema einer vorteilhaften Ausführungsform des erfindungsgemässen Durchflussmessgerätes,

Fig. 2 den Ablauf des relativen Ausgangsspannungsunterschiedes des Phasendiskriminators in Abhängigkeit von dem Phasenunterschied der Eingangssignale,

Fig. 3 eine andere vorteilhafte Ausführungsform ebenfalls blockschemenartig.

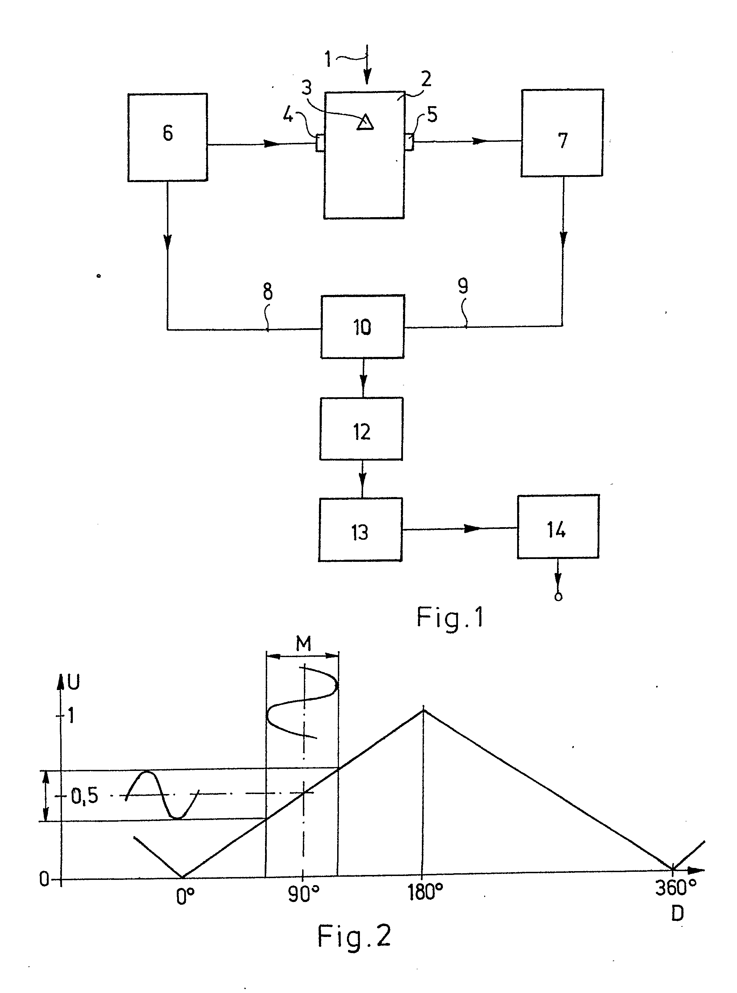

In der Abbildung 1, ist ein Teil vom Blockschema einer einfachen Ausführung des Gerätes dargestellt. Auf das Messrohr /2/ wurde ein Umformer /4/ für elektrisches Signal - Ultraschall /im weiteren Schallstrahler/ montier, der Ultraschall an einen anderen Umformer /5/ für Ultraschall -elektrisches Signal im weiteren Mikrophon, strahlt. In dem Wege der Strömung Richtung 1 wurde ein Störkörper /3/ angebracht; die sich von diesem Körper ablösenden Wirbel beeinflussen die Verbreitungszeit der durchgehenden Ultraschallwellen; diese Zeit wird verlängert oder verkürzt je nachdem, ob die Richtung der Wirbelung und die Verbreitungsrichtung der Ultraschallwellen auf der Strecke der Wirbel zwischen dem Schallstrahler und dem Mikrophon übereinstimmen oder entgegengesetzt sind. Die Periodenzahl der Veränderung des Phasenunterschieds zwischen dem Referenzsignal "R" des Generators /6/ - durch den der Ultraschallstrahler /4/ erregt wird - und dem verstärkten Signal "B" des Mikrophons /5/ stimmt mit der Zhal der Wirbel überein, die sich von Störungskörper /3/ ablössen. An die beiden Eingänge des Phasendiskriminators /10/ werden die Signale "R" und "B", an seinen Ausgang der Eingang des Bandfilters /12/ - das zum Frequenzbereich der Wirbelablösungen abgestimmt ist - angeschlossen. Das Bandfilter /12/ unterdrückt zwar einen Teil der Störungssignale am Ausgang des Phasendiskriminators /10/, jedoch treten zusätzlich die Wirkungen der beseitigenden Erscheinungen, die die entsprechende Funktion verhindern, auf. Unsere Erfindung gibt eine einfache und wirtschaftliche Lösung, diese zu beseitigen.

Der Phasenunterschied zwischen den Eingangsignalen "R" und "B" des Phasendiskriminators setzen sich aus folgenden Hauptfaktoren zusammen:

$$\theta_B - \theta_R = d/\lambda \times 360° + \theta_H/f/ + \theta_M/f/ + \theta/m/ \quad 1 A$$
$$\text{wo } \lambda = V/f \quad 1 B$$

$\theta_B$ Phasenwinkel des Signals "B" am Eingang des Phasendiskriminators

$\theta_R$ Phasenwinkel des Signals "R" am Eingang des Phasendiskriminators

d effektiver Abstand zwischen dem Schallstrahler und dem Mikrophoz

$\lambda$ Wellenlänge des Ultraschalls im Medium

$\theta_H/f/$ elektrisches Signal - Ultraschall - Phasencharakteristik des Schallstrahlers /abhängig von der Frequenz/

$\theta_M/f/$ Ultraschall - elektrisches Signal - Phasencharakteristik des Mikrophons /abhängig von der Frequenz/

$\theta/m/$ Phasenmodulation verursacht durch die ablösenden Wirbel

v Verbreitungsgeschwindigkeit des Ultraschalls im Medium die Frequenz des Ultraschalls

In der Abbildung 2, wurde die relative Ausgangsspannungscharakteristik in Abhänigkeit des Phasenunterschiedes der Eingangssignale /$\theta_B - \theta_R$/. Der optimales Arbeitspunkt befindet sich in der Mitte der linearen Strecke, bei einem Phasenwert von 90°. Die Abweichung des Phasenarbeitspunktes FM vom optimalen Wert verursacht eine Störung in der Funktion, wenn der Phasenhub der Phasenmodulation $\theta/m/$, die durch die überlagerten Luftwirbel verursacht wurde, den Bruchpunkt der Charakteristik bei 0 und 180° erreicht.

Ein Grund für die Verschiebung des Phasenarbeitspunktes FM ist die Veränderung der Schallgeschwindigkeit im Medium, die durch die Veränderung der Umgebungsbedingungen /Druck, Temperatur usw./ verursacht wird. Infolge der Veränderung der Schallgeschwindigkeit ändert sich auch die Wellenlänge; die Wirkung dieser Veränderung ist umso grösser, je grösser der Abstand "d" zwischen dem Schallstrahler und dem Mikrophon im Vergleich zur Wellenlänge ist. Es wird dann kritisch sein, wenn ein Basisabstand d > 10$\lambda$ zwischen dem Schallstrahler und dem Mikropho n zur Konstruktion benötigt wird.

Der einsatzbare Schallstrahler und Mikrophon sind Mechanische Resonantelemente von grossem Gütefaktor. In der Umgebung der Betriebsfrequenz - die zum besten Signal -Geräusch - Verhältnis gehört - ändern sich ihre Phasenkarakteristiks $\theta_H/f/$ und $\theta_M/f/$ um mehr hundert Grad bei einer kleinen relativen Veränderung der Frequenz. Der Phasenarbeitspunkt kann sich auch dann kritisch verschieben, wenn ein Generator verwendet wird, dessen Betriebsfrequenz nicht stabil genug ist. Die Phasenstabilität eines Generators könnte nur mit Hilfe eines teuereren und komplizierten Stromkreises verbessert werden, die Verschiebung des Phasenarbeitspunktes infolge der Veränderung der Wellenlänge könnte dadurch jedoch nicht gelöst werden.

Wir haben erkannt, dass dieses Problem einfach und wirtschaftlich gelöst werden kann, wenn eine Schleife mit geschlossener Phase /PLL/ verwendet wird. Die Veränderung des Phasenarbeitspunktes, der sich infolge der Veränderung der Umgebungsverhältnisse auftritt, kann mit Hilfe der Phasencharakteristiks $\theta_M/f/$ und $\theta_H/f/$ durch geringere Veränderung der Betriebsfrequenz kompensiert werden. Durch den Verleich des Ausgangssignals des Phasendiskriminators mit der Referenzspannung kann ein Fehlersignal gebildet werden, mit dem die Betriebsfrequenz des Generators in der entsprechenden Richtung verändert werden kann.

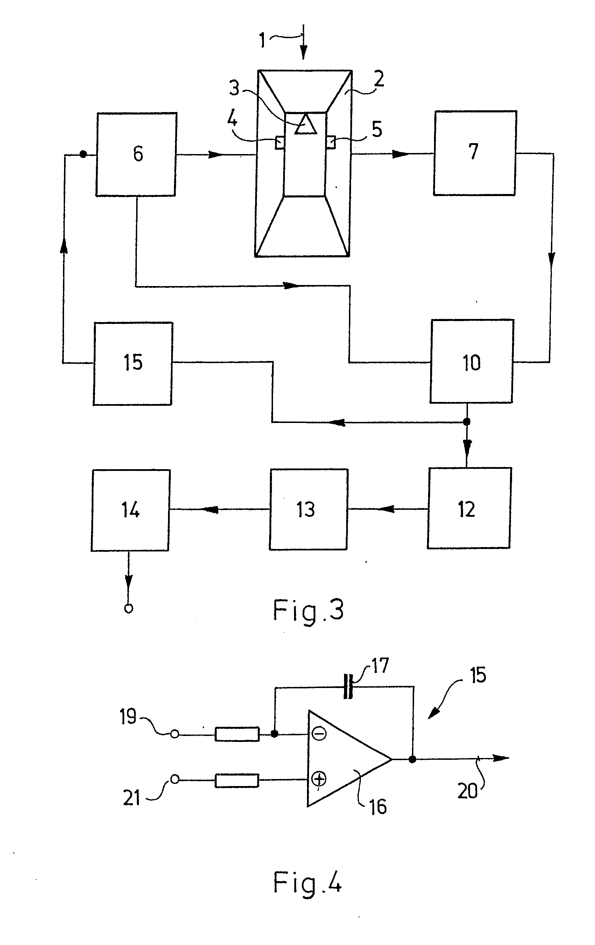

In der Abbildung 3, wurde eine vorteilhafte Ausführungsform der Erfindung dargestellt. Zwischen den Ausgang /11/ des Phasendiskriminators /10/ und den Frequenzregeleingang /17/ des Generators /6/ wurde ein Regelungssignalgeber /18/ geschaltet. Eine einfache Ausführungsform das Regelungssignalgebers ist in der Abbildung 4, dargestellt. Der Punkt 20 soll an den Punkt 11 des Phasendiskriminators /10/, der Punkt 21 an den Punkt 17 des Generators /6/ angeschlossen werden. Wird der Wert 0,5 der relativen Spannungsskala der Abbildung 1, an den Referenzpunkt 19 angeschlossen, so hält der Regelkreis den Phasenarbeitspunkt bei 90°. Durch den entsprechenden Auswahl der Zeitkonstante des Funktionverstärkers kann die Stabilität des Regelkreises im ganzen Frequenzbereich gewährleistet werden und zwar so, dass die Amplitude der Phasenmodulation θ/m/, die der Strömungsgeschwindigkeit des zu messenden Mediums proportional ist, nicht gedämpft wird.

**Patentansprüche**

1. Durchflussmessgerät, insbesondere zur Messung von Strömung von Gasen, mit einem in der Strömung der Gasen angeordneten Störungskörper und einer an dem Störungskörper sich abtrennende Wirbel zählenden Vorrichtung, dadurch **gekennzeichnet,** dass die Vorrichtung ein mit Ultraschall betriebenes Messrohr (2) enthält, das durch die zu messende Gasströmung durchströmt wird und in einer zur Strömungsrichtung des Gases senkrechten Ebene an diametral entgegengesetzten Stellen des Messrohres (2) einen Ultraschallstrahler (4) und einen Ultraschallempfänger (5) hat, wobei der Störungskörper (3) in Strömungsrichtung gesehen vor dieser Ebene angeordnet ist.

2. Durchflussmessgerät nach Anspruch 1, dadurch **gekennzeichnet,** dass der Ultraschallstrahler (4) an einem Ausgang eines Generators (6), der Ultraschallempfänger (5) an einem Eingang eines Verstärkers (7) sowie ein Referenzsignalausgang des Generators (6) und ein Ausgang des Verstärkers (7) an Eingänge eines Phasendiskriminators (10) angeschlossen sind, wobei an einem Ausgang des Phasendiskriminators (10) in Reihe geschaltet ein Bandfilter (12), ein Komparator (13) und ein Konverter (14) anliegen.

3. Durchflussmessgerät nach Anspruch 2, dadurch **gekennzeichnet,** dass an einem Ausgang des Phasendiskriminators (10) ein Regelsignalgeber (18) und an dessen Ausgang der Generator (6) angeschlosen sind.

4. Durchflussmessgerät nach Anspruch 2 oder 3, dadurch **gekennzeichnet,** dass der Phasendiskriminator (10) als eine die relativen statischen Phasenunterschiede der an den Eingängen des Phasendiskriminator (10) anliegenden Signale begrenzende und ein den Betriebsfrequenz des Generators (6) korrigierendes Regelsignal für den Generator (6) erzeugende Schaltung ausgebildet ist.

5. Durchflussmessgerät nach einem der Ansprüche 1 bis 4, dadurch **gekennzeichnet,** dass der Verstärker (7) eine automatische Verstärkung hat.

6. Durchflussmessgerät nach einem der Ansprüche 1 bis 4, dadurch **gekennzeichnet,** dass der Verstärker (7) limitierend ist.

7. Durchflussmessgerät nach einem der Ansprüche 1 bis 6, dadurch **gekennzeichnet,** dass das Messrohr als ein Venturi-Rohr ausgebildet ist.

Fig.1

Fig.2

Fig.3

Fig.4

## EINSCHLÄGIGE DOKUMENTE

EP 89890108.7

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE - A - 3 601 407<br>(BOPP & REUTHER GMBH)<br>　* Totality; especially<br>　　abstract; fig. * | 1-4 | G 01 F 1/32 |
| Y | 　* Totality; especially<br>　　column 4, lines 47-50 *<br>-- | 5-7 | |
| Y | GB - A - 2 155 635<br>(BESTOBELL LTD.)<br>　* Abstract; fig. 4; page 2,<br>　　lines 71-99 *<br>-- | 5-6 | |
| Y | GB - A - 2 142 725<br>(UNITED GAS INDUSTRIES LTD.)<br>　* Abstract; fig. * <br>-- | 7 | |
| A | DE - A1 - 3 713 523<br>(MITSUBISHI DENKI K.K.)<br>　* Abstract; fig. 1 *<br>---- | 1-6 | |

| RECHERCHIERTE SACHGEBIETE (Int. Cl.4) |
|---|
| G 01 F 1/00 |

Der vorliegende Recherchenbericht wurde für alle Patentansprüche erstellt.

| Recherchenort | Abschlußdatum der Recherche | Prüfer |
|---|---|---|
| WIEN | 11-07-1989 | FIALLA |